# EUROPEAN PATENT APPLICATION

(11) **EP 4 607 835 A1**
(43) Date of publication of application: **27.08.2025**
(21) Application number: 22962495.2
(22) Date of filing: 21.10.2022
(51) Int. Cl.: H04L 5/00, H04W 72/20

(54) **TRANSMISSION CONFIGURATION INDICATOR STATE DETERMINATION METHOD AND APPARATUS, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Gunzelmann, Rainer
(86) International application number: PCT/CN2022/126845
(87) International publication number: WO 2024/082314

(57) **Abstract**

The present invention relates to the technical field of communications. Disclosed are a transmission configuration indicator (TCI) state determination method and apparatus, and a storage medium, used for enabling a terminal and a network device to perform transmission by using consistent TCI states, thereby improving the signal quality of TCI state-based M-TRP transmission. The method comprises: receiving first information sent by a network device, the first information being used for a terminal to determine that a transmission mode used when performing physical downlink control channel (PDCCH) transmission is a single-frequency network (SFN) transmission mode; and receiving second information sent by the network device, the second information being used for the terminal to determine an association relationship between a first control resource set and at least two TCI states.

## Description

### FIELD

The present invention relates to the field of communication technologies, and in particular relates to a method and an apparatus for determining a transmission configuration indicator (TCI) state, and a storage medium.

### BACKGROUND

In new radio (NR), for example, in a case where a communication frequency band is in a frequency range 2, a high-frequency channel may attenuate quickly, and beam-based transmission and reception are required to ensure coverage.

In the related art, in order to reduce signaling overhead, utilization of a unified transmission configuration indicator (unified TCI) state is introduced. The unified TCI state may be indicated separately for uplink and downlink, or indicated jointly for uplink and downlink. That is, in a case where a network device indicates a TCI state for downlink, the TCI state may be applied to a physical downlink shared channel (PDSCH) and/or its corresponding demodulation reference signal (DMRS), at least a part of a physical downlink control channel (PDCCH) and/or its corresponding DMRS, and at least a part of a channel state information reference signal (CSI-RS) of a terminal. In a case where the network device indicates the TCI state for uplink, the TCI state may be applied to a physical uplink shared channel (PUSCH) and/or its corresponding DMRS, and at least a part of a physical uplink control channel (PUCCH) and/or its corresponding DMRS, and a part of a sounding reference signal (SRS) of the terminal. In a case where the network device indicates a joint TCI state, the joint TCI state may be applied to both uplink and downlink channels and/or a reference signal.

The related art is only applicable to a case of a single transmission reception point (S-TRP).

### SUMMARY

In order to overcome problems existing in related technologies, the present invention provides a method and an apparatus for determining a transmission configuration indicator (TCI) state, and a storage medium.

According to a first aspect of embodiments of the present invention, there is provided a method for determining a transmission configuration indicator (TCI) state, applied to a terminal, including: receiving first information sent by a network device, in which the first information is configured for the terminal to determine that a transmission mode used for performing a physical downlink control channel (PDCCH) transmission is a single frequency network (SFN) transmission mode; and receiving second information sent by the network device, in which the second information is configured for the terminal to determine an association relationship between a first control resource set and at least two TCI states.

In an implementation, the method further includes: receiving third information sent by the network device, in which the third information indicates at least one TCI state; and determining, according to the at least one TCI state, whether to monitor a PDCCH candidate resource of the first control resource set; and/or determining, according to the at least one TCI state, one or more TCI states corresponding to a monitored PDCCH candidate resource of the first control resource set.

In an implementation, the TCI state indicated by the third information is one TCI state; and determining, according to the at least one TCI state, whether to monitor the PDCCH candidate resource of the first control resource set includes: determining, according to the one TCI state, to stop monitoring the PDCCH candidate resource of the first control resource set.

In an implementation, determining, according to the at least one TCI state, the one or more TCI states corresponding to the monitored PDCCH candidate resource of the first control resource set includes: monitoring the PDCCH candidate resource of the first control resource set according to the at least one TCI state indicated by the third information.

In an implementation, the TCI state indicated by the third information is a plurality of TCI states; and monitoring the PDCCH candidate resource of the first control resource set according to the at least one TCI state indicated by the third information includes: monitoring the PDCCH candidate resource of the first control resource set according to the plurality of TCI states.

In an implementation, the TCI state indicated by the third information is one TCI state; and monitoring the PDCCH candidate resource of the first control resource set according to the at least one TCI state indicated by the third information includes: monitoring the PDCCH candidate resource of the first control resource set according to the one TCI state.

In an implementation, the TCI state indicated by the third information includes a first TCI state, and the first TCI state is an update of a second TCI state of the second TCI state and a third TCI state that are used currently by the terminal; and monitoring the PDCCH candidate resource of the first control resource set according to the at least one TCI state indicated by the third information includes: monitoring the PDCCH candidate resource of the first control resource set according to the first TCI state and the third TCI state.

In an implementation, the second information indicates the association relationship between the first control resource set and the at least two TCI states in at least one manner of: indicating at least two TCI states corresponding to the first control resource set; or indicating at least two TCI states corresponding to a control resource set group or a control resource set pool index to which the first control resource set belongs.

In an implementation, the second information includes at least one of: a radio resource control (RRC) signaling; a medium access control-control element (MAC-CE); or downlink control information (DCI).

In an implementation, the third information includes at least one of: an MAC-CE; or DCI.

In an implementation, the MAC-CE indicates at least one TCI state, and the at least one TCI corresponds to one code point in a TCI state indication field carried in the DCI; or the MAC-CE indicates at least one TCI state, a plurality of code points in the TCI state indication field carried in the DCI correspond to the at least one TCI state respectively, and the TCI state indication field carried in the DCI indicates one code point among the plurality of code points.

In an implementation, the at least one TCI state indicated by the third information is configured to determine a quasi-co-location (QCL) assumption of at least one of a physical downlink shared channel (PDSCH), a PDCCH, a control resource set associated with the PDCCH, a demodulation reference signal (DMRS) of the PDSCH and/or the PDCCH, or a non-zero power (NZP) channel state information reference signal (CSI-RS); and/or the at least one TCI state indicated by the third information is configured to determine a QCL assumption of at least one of a physical uplink control channel (PUCCH), a physical uplink shared channel (PUSCH), a DMRS of the PUCCH and/or the PUSCH, or a sounding reference signal (SRS).

In an implementation, the TCI state includes an uplink and downlink joint TCI state and/or a downlink TCI state.

According to a second aspect of embodiments of the present invention, there is provided a method for determining a transmission configuration indicator (TCI) state, applied to a network device, including: sending first information to a terminal, in which the first information indicates to the terminal that a transmission mode used for performing a physical downlink control channel (PDCCH) transmission is a single frequency network (SFN) transmission mode; and sending second information to the terminal, in which the second information indicates to the terminal that a first control resource set is associated with at least two TCI states.

In an implementation, the method further includes: sending third information to the terminal, in which the third information indicates at least one TCI state; in which the at least one TCI state indicates whether the terminal monitors a PDCCH candidate resource of the first control resource set; and/or the at least one TCI state indicates one or more TCI states corresponding to the PDCCH candidate resource of the first control resource set monitored by the terminal.

In an implementation, the TCI state indicated by the third information is one TCI state, and the one TCI state indicates that the terminal stops monitoring the PDCCH candidate resource of the first control resource set.

In an implementation, the at least one TCI state indicated by the third information indicates that the terminal monitors the PDCCH candidate resource of the first control resource set.

In an implementation, the TCI state indicated by the third information is a plurality of TCI states, and the plurality of TCI states indicate that the terminal monitors the PDCCH candidate resource of the first control resource set.

In an implementation, the TCI state indicated by the third information is one TCI state, and the one TCI state indicates that the terminal monitors the PDCCH candidate resource of the first control resource set.

In an implementation, the TCI state indicated by the third information includes a first TCI state, and the first TCI state is an update of a second TCI state of the second TCI state and a third TCI state that are used currently by the terminal; and the first TCI state indicates that the terminal monitors the PDCCH candidate resource of the first control resource set.

In an implementation, the second information indicates a mapping relationship between the first control resource set and the at least two TCI states in at least one of: indicating at least two TCI states corresponding to the first control resource set; or indicating at least two TCI states corresponding to a control resource set group or a control resource set pool index to which the first control resource set belongs.

In an implementation, the second information includes at least one of: a radio resource control (RRC) signaling; a medium access control-control element (MAC-CE); or downlink control information (DCI).

In an implementation, the third information includes at least one of: an MAC-CE; or DCI.

In an implementation, the MAC-CE indicates at least one TCI state, and the at least one TCI corresponds to one code point in a TCI state indication field carried in the DCI; or the MAC-CE indicates at least one TCI state, a plurality of code points in the TCI state indication field carried in the DCI correspond to the at least one TCI state respectively, and the TCI state indication field carried in the DCI indicates one code point among the plurality of code points.

In an implementation, the at least one TCI state indicated by the third information is configured to determine a quasi-co-location (QCL) assumption of at least one of a physical downlink shared channel (PDSCH), a PDCCH, a control resource set associated with the PDCCH, a demodulation reference signal (DMRS) of the PDSCH and/or the PDCCH, or a non-zero power (NZP) channel state information reference signal (CSI-RS); and/or the at least one TCI state indicated by the third information is configured to determine a QCL assumption of at least one of a physical uplink control channel (PUCCH), a physical uplink shared channel (PUSCH), a DMRS of the PUCCH and/or the PUSCH, or a sounding reference signal (SRS).

In an implementation, the TCI state includes an uplink and downlink joint TCI state and/or a downlink TCI state.

According to a third aspect of embodiments of the present invention, there is provided apparatus for determining a transmission configuration indicator (TCI) state, applied to a terminal, including: a receiving module configured to receive first information sent by a network device, in which the first information indicates to the terminal that a transmission mode used for performing a physical downlink control channel (PDCCH) transmission is a single frequency network (SFN) transmission mode; in which the receiving module is further configured to receive second information sent by the network device, and the second information indicates to the terminal that a first control resource set is associated with at least two TCI states.

In an implementation, the receiving module is configured to receive third information sent by the network device, in which the third information indicates at least one TCI state; and a processing module is configured to determine, according to the at least one TCI state, whether to monitor a PDCCH candidate resource of the first control resource set; and/or determine, according to the at least one TCI state, one or more TCI states corresponding to a monitored PDCCH candidate resource of the first control resource set.

In an implementation, the TCI state indicated by the third information is one TCI state; and the processing module is configured to determine, according to the one TCI state, to stop monitoring the PDCCH candidate resource of the first control resource set.

In an implementation, the processing module is configured to monitor the PDCCH candidate resource of the first control resource set according to the at least one TCI state indicated by the third information.

In an implementation, the TCI state indicated by the third information is a plurality of TCI states; and the processing module is configured to monitor the PDCCH candidate resource of the first control resource set according to the plurality of TCI states.

In an implementation, the TCI state indicated by the third information is one TCI state; and the processing module is configured to monitor the PDCCH candidate resource of the first control resource set according to the one TCI state.

In an implementation, the TCI state indicated by the third information includes a first TCI state, and the first TCI state is an update of a second TCI state of the second TCI state and a third TCI state that are used currently by the terminal; and the processing module is configured to monitor the PDCCH candidate resource of the first control resource set according to the first TCI state and the third TCI state.

In an implementation, the second information indicates the association relationship between the first control resource set and the at least two TCI states in at least one manner of: indicating at least two TCI states corresponding to the first control resource set; or indicating at least two TCI states corresponding to a control resource set group or a control resource set pool index to which the first control resource set belongs.

In an implementation, the second information includes at least one of: a radio resource control (RRC) signaling; a medium access control-control element (MAC-CE); or downlink control information (DCI).

In an implementation, the third information includes at least one of: an MAC-CE; or DCI.

In an implementation, the MAC-CE indicates at least one TCI state, and the at least one TCI corresponds to one code point in a TCI state indication field carried in the DCI; or the MAC-CE indicates at least one TCI state, a plurality of code points in the TCI state indication field carried in the DCI correspond to the at least one TCI state respectively, and the TCI state indication field carried in the DCI indicates one code point among the plurality of code points.

In an implementation, the at least one TCI state indicated by the third information is configured to determine a quasi-co-location (QCL) assumption of at least one of a physical downlink shared channel (PDSCH), a PDCCH, a control resource set associated with the PDCCH, a demodulation reference signal (DMRS) of the PDSCH and/or the PDCCH, or a non-zero power (NZP) channel state information reference signal (CSI-RS); and/or the at least one TCI state indicated by the third information is configured to determine a QCL assumption of at least one of a physical uplink control channel (PUCCH), a physical uplink shared channel (PUSCH), a DMRS of the PUCCH and/or the PUSCH, or a sounding reference signal (SRS).

In an implementation, the TCI state includes an uplink and downlink joint TCI state and/or a downlink TCI state.

According to a fourth aspect of embodiments of the present invention, there is provided an apparatus for determining a transmission configuration indicator (TCI) state, applied to a network device, including: a sending module configured to send first information to a terminal, in which the first information indicates to the terminal that a transmission mode used for performing a physical downlink control channel (PDCCH) transmission is a single frequency network (SFN) transmission mode; in which the sending module is further configured to send second information to the terminal, and the second information indicates to the terminal that a first control resource set is associated with at least two TCI states.

In an implementation, the sending module is configured to send third information to the terminal, in which the third information indicates at least one TCI state; in which the at least one TCI state indicates whether the terminal monitors a PDCCH candidate resource of the first control resource set; and/or the at least one TCI state indicates one or more TCI states corresponding to the PDCCH candidate resource of the first control resource set monitored by the terminal.

In an implementation, the TCI state indicated by the third information is one TCI state, and the one TCI state indicates that the terminal stops monitoring the PDCCH candidate resource of the first control resource set.

In an implementation, the at least one TCI state indicated by the third information indicates that the terminal monitors the PDCCH candidate resource of the first control resource set.

In an implementation, the TCI state indicated by the third information is a plurality of TCI states, and the plurality of TCI states indicate that the terminal monitors the PDCCH candidate resource of the first control resource set.

In an implementation, the TCI state indicated by the third information is one TCI state, and the one TCI state indicates that the terminal monitors the PDCCH candidate resource of the first control resource set.

In an implementation, the TCI state indicated by the third information includes a first TCI state, and the first TCI state is an update of a second TCI state of the second TCI state and a third TCI state that are used currently by the terminal; and the first TCI state indicates that the terminal monitors the PDCCH candidate resource of the first control resource set.

In an implementation, the second information indicates a mapping relationship between the first control resource set and the at least two TCI states in at least one of: indicating at least two TCI states corresponding to the first control resource set; or indicating at least two TCI states corresponding to a control resource set group or a control resource set pool index to which the first control resource set belongs.

In an implementation, the second information includes at least one of: a radio resource control (RRC) signaling; a medium access control-control element (MAC-CE); or downlink control information (DCI).

In an implementation, the third information includes at least one of: an MAC-CE; or DCI.

In an implementation, the MAC-CE indicates at least one TCI state, and the at least one TCI corresponds to one code point in a TCI state indication field carried in the DCI; or the MAC-CE indicates at least one TCI state, a plurality of code points in the TCI state indication field carried in the DCI correspond to the at least one TCI state respectively, and the TCI state indication field carried in the DCI indicates one code point among the plurality of code points.

In an implementation, the at least one TCI state indicated by the third information is configured to determine a quasi-co-location (QCL) assumption of at least one of a physical downlink shared channel (PDSCH), a PDCCH, a control resource set associated with the PDCCH, a demodulation reference signal (DMRS) of the PDSCH and/or the PDCCH, or a non-zero power (NZP) channel state information reference signal (CSI-RS); and/or the at least one TCI state indicated by the third information is configured to determine a QCL assumption of at least one of a physical uplink control channel (PUCCH), a physical uplink shared channel (PUSCH), a DMRS of the PUCCH and/or the PUSCH, or a sounding reference signal (SRS).

In an implementation, the TCI state includes an uplink and downlink joint TCI state and/or a downlink TCI state.

According to a fifth aspect of embodiments of the present invention, there is provided an apparatus for determining a transmission configuration indicator (TCI) state, including: a processor; and a memory for storing processor-executable instructions; in which the processor is configured to perform the method described in the first aspect and any one of embodiments thereof.

According to a sixth aspect of embodiments of the present invention, there is provided an apparatus for determining a transmission configuration indicator (TCI) state, including: a processor; and a memory for storing processor-executable instructions; in which the processor is configured to perform the method described in the second aspect and any one of embodiments thereof.

According to a seventh aspect of embodiments of the present invention, there is provided a storage medium having stored therein instructions that, when executed by a processor of a terminal, cause the terminal to perform the method described in the first aspect and any one of embodiments thereof.

According to an eighth aspect of embodiments of the present invention, there is provided a storage medium having stored therein instructions that, when executed by a processor of a network device, cause the terminal to perform the method described in the second aspect and any one of embodiments thereof.

According to a ninth aspect of embodiments of the present invention, there is provided a communication system, including a terminal and a network device, in which the terminal is configured to perform the method described in the first aspect and any one of embodiments thereof; and the network device is configured to perform the method described in the second aspect and any one of embodiments thereof.

The technical solutions provided by embodiments of the present invention may include the following advantageous effects. In a case where the terminal determines that the transmission mode used for performing the PDCCH transmission is the SFN transmission mode according to the first information sent by the network device, the association relationship between the first control resource set and the at least two TCI states is determined according to the second information sent by the network device. Accordingly, since both the terminal and the network device may determine the at least two TCI states associated with the first control resource set, the terminal and the network device may perform the PDCCH transmission using the consistent TCI state, a signal quality of a multi-transmission reception point (M-TRP) transmission based on the TCI state is improved.

It is to be understood that both the foregoing general description and the following detailed description are illustrative and explanatory only and are not restrictive of the disclosure, as claimed.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
FIG. 1 is a schematic diagram illustrating a wireless communication system according to an illustrative embodiment.
FIG. 2 is a flow chart illustrating a method for determining a transmission configuration indicator (TCI) state according to an illustrative embodiment.
FIG. 3 is a flow chart illustrating a method for determining a TCI state according to an illustrative embodiment.
FIG. 4 is a flow chart illustrating a method for determining a TCI state according to an illustrative embodiment.
FIG. 5 is a flow chart illustrating a method for determining a TCI state according to an illustrative embodiment.
FIG. 6 is a flow chart illustrating a method for determining a TCI state according to an illustrative embodiment.
FIG. 7 is a flow chart illustrating a method for determining a TCI state according to an illustrative embodiment.
FIG. 8 is a flow chart illustrating a method for determining a TCI state according to an illustrative embodiment.
FIG. 9 is a flow chart illustrating a method for determining a TCI state according to an illustrative embodiment.
FIG. 10 is a flow chart illustrating a method for determining a TCI state according to an illustrative embodiment.
FIG. 11 is a flow chart illustrating a method for determining a TCI state according to an illustrative embodiment.
FIG. 12 is a block diagram illustrating an apparatus for determining a TCI state according to an illustrative embodiment.
FIG. 13 is a block diagram illustrating an apparatus for determining a TCI state according to an illustrative embodiment.
FIG. 14 is a block diagram illustrating a device for determining a TCI state according to an illustrative embodiment.
FIG. 15 is a block diagram illustrating a device for determining a TCI state according to an illustrative embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure.

In new radio (NR), for example, in a case where a communication frequency band is in a frequency range 2, a high-frequency channel may attenuate quickly, and beam-based transmission and reception are required to ensure coverage.

In the related art, in order to reduce signaling overhead, utilization of a unified transmission configuration indicator (unified TCI) state is introduced. The unified TCI state may be indicated separately for uplink and downlink, or indicated jointly for uplink and downlink. That is, in a case where a network device indicates a TCI state for downlink, the TCI state may be applied to a physical downlink shared channel (PDSCH) and/or its corresponding demodulation reference signal (DMRS), at least a part of a physical downlink control channel (PDCCH) and/or its corresponding DMRS, and at least a part of a channel state information reference signal (CSI-RS) of a terminal. In a case where the network device indicates the TCI state for uplink, the TCI state may be applied to a physical uplink shared channel (PUSCH) and/or its corresponding DMRS, and at least a part of a physical uplink control channel (PUCCH) and/or its corresponding DMRS, and a part of a sounding reference signal (SRS) of the terminal. In a case where the network device indicates a joint TCI state, the joint TCI state may be applied to both uplink and downlink channels and/or a reference signal.

The related art is only applicable to a case of a single transmission reception point (S-TRP).

The inventor has noticed that, in a multi-transmission reception point (M-TRP) scenario, for two search space sets (SS sets) configured with an association relationship, in a case where a plurality of TCI states are indicated, each of the two SS sets may employ one TCI state respectively. However, in a case where only one TCI state is indicated, how to monitor a PDCCH candidate set in the two SS sets configured with the association relationship is a problem to be solved.

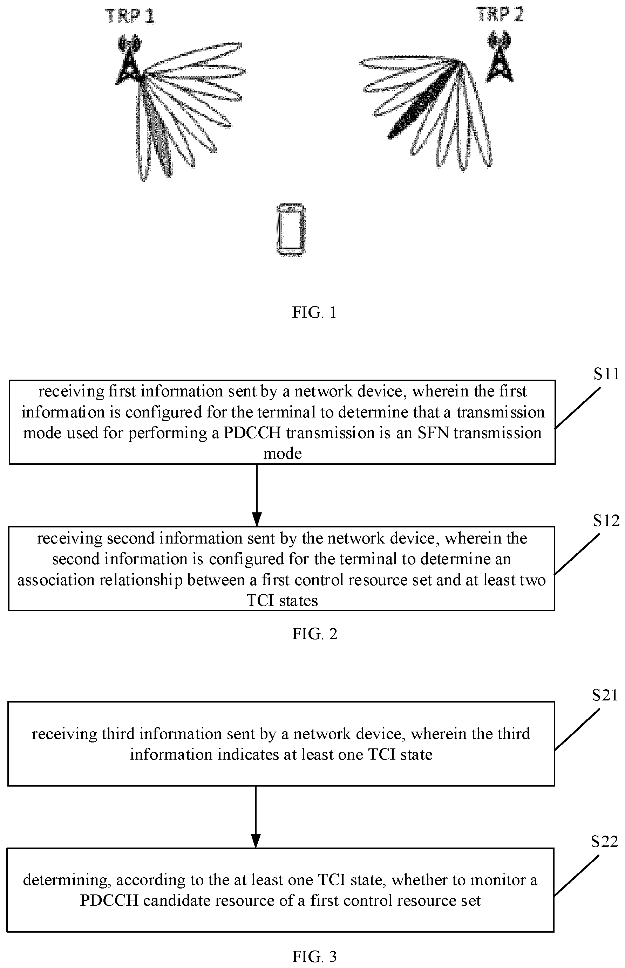

A method for determining a transmission configuration indicator (TCI) state provided by embodiments of the present invention may be applied to a wireless communication system illustrated in FIG. 1. As shown in FIG. 1, the wireless communication system includes a network device and a terminal. The terminal is connected to the network device via a radio resource, and performs data transmission.

It may be understood that the communication system shown in FIG. 1 is only for schematic illustration. The wireless communication system may also include other network devices, such as core network devices, wireless relay devices, and wireless backhaul devices, which are not shown in FIG 1. The number of network devices and the number of terminals included in the wireless communication system are not limited in the embodiments of the present invention.

It may be further understood that the wireless communication system in the embodiments of the present invention is a network that provides a wireless communication function. The wireless communication system may employ different communication technologies, such as code division multiple access (CDMA), wideband code division multiple access (WCDMA), time division multiple access (TDMA), frequency division multiple access (FDMA), orthogonal frequency-division multiple access (OFDMA), single carrier frequency division multiple access (SC-FDMA), and carrier sense multiple access with collision avoidance. The network may be divided into a 2nd generation (2G) network, a 3G network, a 4G network, or a future evolution network, such as a 5G network, which may also be referred to as a new radio (NR) network, according to the capacity, rate, delay and other factors of different networks. For ease of description, a wireless communication network will be sometimes abbreviated as a network in the present invention.

Further, the network device involved in the present invention may also be referred to as a radio access network device. The radio access network device may be a base station, an evolved node B, a home base station, an access point (AP) in a wireless fidelity (WIFI) system, a wireless relay node, a wireless backhaul node, a transmission point (TP), a transmission and reception point (TRP), or the like, or may also be a gNB in a NR system, or may also be a component or a part of a device that constitutes a base station, etc. It is to be understood that the specific technology and specific device form adopted by the network device are not limited in the embodiments of the present invention. In the present invention, the network device may provide communication coverage for a particular geographic area and may communicate with the terminal located within the coverage area (cell). The network device may also be a vehicle-mounted device when it is used in a vehicle to everything (V2X) communication system.

Further, the terminal involved in the present invention, which may also be referred to as a terminal device, a user equipment (UE), a mobile station (MS), a mobile terminal (MT), etc., is a device that provides voice and/or data connectivity to a user. For example, the terminal may be a handheld device with a wireless connection function, a vehicle-mounted device, or the like. At present, some examples of the terminal are a mobile phone, a customer premise equipment (CPE), a pocket personal computer (PPC), a palmtop computer, a personal digital assistant (PDA), a notebook computer, a tablet computer, a wearable device, a vehicle-mounted device, or the like. In addition, the terminal device may also be vehicle-mounted device when it is used in a vehicle to everything (V2X) communication system. It is to be understood that the specific technology and specific device form adopted by the terminal are not limited in the embodiments of the present invention.

In the NR, for example, in a case where a communication frequency band is in a frequency range 2, a high-frequency channel may attenuate quickly, beam-based transmission and reception are required to ensure coverage.

In the related art, beams used by the PDCCH and/or the DMRS of the PDCCH, the PDSCH and/or the DMRS of the PDSCH, the PUCCH and/or the DMRS of the PUCCH, the PUSCH and/or the DMRS of the PUSCH, and/or the reference signal are all independently indicated. The reference signal may include a CSI-RS, an SRS, a positioning reference signal (PRS), a tracking reference signal (TRS), and the like. For example, the CSI-RS may include a CSI-RS for channel state information measurement, a CSI-RS for beam measurement, or a CSI-RS for path loss estimation. The SRS may include an SRS for channel state information measurement based on a codebook or non-codebook, an SRS for beam measurement, or an SRS for positioning measurement.

In general, for the PDCCH and/or the DMRS of the PDCCH, and the PUCCH and/or the DMRS of the PUCCH, their respective beams are activated via a media access control control element (MAC CE), respectively, while for the PDSCH and/or the DMRS of the PDSCH, and the PUSCH and/or the DMRS of the PUSCH, their respective beams are indicated via a downlink control information (DCI) signaling, respectively.

The beam here may be indicated by a TCI state or spatialrelationinfo (a spatial relation). A TCI state corresponding to the PDCCH includes a TCI state corresponding to the PDCCH and/or the DMRS thereof, that is, the TCI state is configured for reception of the PDCCH and/or the DMRS thereof. Similarly, a TCI state corresponding to the PDSCH includes a TCI state corresponding to the PDSCH and/or the DMRS thereof, that is, the TCI state is configured for reception of the PD SCH and/or the DMRS thereof. A TCI state or spatialrelationinfo corresponding to the PUCCH includes a TCI state or spatialrelationinfo corresponding to the PUCCH and/or its DMRS, that is, the TCI state or spatialrelationinfo is configured for transmission of the PUCCH and/or the DMRS thereof. A TCI state or spatialrelationinfo corresponding to the PUSCH includes a TCI state or spatialrelationinfo corresponding to the PUSCH and/or the DMRS thereof, that is, the TCI state or spatialrelationinfo is configured for transmission of the PUSCH and/or the DMRS thereof.

Furthermore, in order to reduce signaling overhead, in another related art, utilization of the unified TCI state is introduced. The unified TCI state may be indicated separately for the uplink and the downlink, or jointly for the uplink and the downlink. That is, in a case where the network device indicates the TCI state for the downlink (DL TCI state), the TCI state may be applied to the PDSCH and/or its corresponding DMRS, at least a part of the PDCCH and/or its corresponding DMRS, and at least a part of the CSI-RS of the terminal. In a case where the network device indicates the TCI state for uplink (UL TCI state), the TCI state may be applied to the PUSCH and/or its corresponding DMRS, at least a part of the PUCCH and/or its corresponding DMRS, and a part of the SRS of the terminal. In a case where the network device indicates the joint TCI state, the joint TCI state may be applied to both uplink and downlink channels and/or the reference signal.

However, the related art is only applicable to a case of the S-TRP, and a case of the M-TRP is not considered.

In a case where a transmission mode in which the PDCCH is configured is a single frequency network (SFN) transmission mode, since the SFN transmission mode refers to transmission from the M-TRP, each TRP sends the same signal on the same resource, that is, PDCCH transmission is performed on the same time domain resource, frequency domain resource and DMRS port using a quasi-co-location (QCL) assumption of the plurality of TCI states. Regarding PDCCH reception of CORESET associated with two TCI states, in a case where the SFN transmission mode is an SFN A, the terminal directly employs QCL assumption corresponding to the plurality of TCI states; and in a case where the SFN transmission mode is an SFN B, the terminal does not employ Doppler shift and a Doppler spread parameter in the QCL assumption corresponding to the last TCI state.

In a single DCI and M-TRP scenario, one MAC CE and/or DCI signaling may indicate the plurality of TCI states. In a case where the plurality of TCI states are indicated, a PDCCH of a control resource set associated with the two TCI states may be directly monitored using the plurality of TCI states. However, in a case where only one TCI state is indicated, how to monitor a PDCCH candidate resource of the control resource set associated with the two TCI states is a problem to be solved.

On this basis, embodiments of the present invention provide the method for determining the TCI state. In a case where the terminal determines that a transmission mode used for performing a PDCCH transmission is the SFN transmission mode according to first information sent by the network device, an association relationship between a first control resource set and at least two TCI states is determined according to second information sent by the network device. Accordingly, since both the terminal and the network device may determine the at least two TCI states associated with the first control resource set, the terminal and the network device may perform the PDCCH transmission using the consistent TCI state, a signal quality of an M-TRP transmission based on the TCI state is improved.

It is worth noting that the TCI state in the embodiments of the present invention refers to the unified TCI state unless otherwise specified.

FIG. 2 is a flow chart illustrating a method for determining a transmission configuration indicator (TCI) state according to an illustrative embodiment. As shown in FIG. 2, the method for determining the TCI state is applied to a terminal, and includes the following steps.

In step S11, first information sent by a network device is received, in which the first information is configured for the terminal to determine that a transmission mode used for performing a PDCCH transmission is a SFN transmission mode.

In step S12, second information sent by the network device is received, in which the second information is configured for the terminal to determine an association relationship between a first control resource set and at least two TCI states.

In the embodiments of the present invention, in a case where the terminal determines that the transmission mode used for performing the PDCCH transmission is the SFN transmission mode according to the first information sent by the network device, the association relationship between the first control resource set and the at least two TCI states is determined according to the second information sent by the network device. Accordingly, since both the terminal and the network device may determine the at least two TCI states associated with the first control resource set, the terminal and the network device may perform the PDCCH transmission using the consistent TCI state, a signal quality of an M-TRP transmission based on the TCI state is improved.

In a method for determining a TCI state provided by embodiments of the present invention, third information, sent by the network device, for indicating at least one TCI state is received, and whether to monitor a PDCCH candidate resource of a first control resource set is determined according to the third information. As shown in FIG. 3, FIG. 3 is a flow chart illustrating a method for determining a TCI state according to an illustrative embodiment, which includes the following steps.

In step S21, third information sent by a network device is received, in which the third information indicates at least one TCI state.

In step S22, it is determined, according to the at least one TCI state, whether to monitor a PDCCH candidate resource of a first control resource set.

In the embodiments of the present invention, the terminal determines the association relationship between the first control resource set and at least two TCI states. Specifically, the association relationship between the first control resource set and the at least two TCI states may be determined in any manner. For example, the association relationship between the first control resource set and the at least two TCI states may be determined by an association relationship between the first control resource set and the at least two TCI states indicated by second information in the method of steps 11 to 12, and then the second information indicates the association relationship between the first control resource sent and the TCI states indicated by the third information. Other methods may be used to determine the association relationship between the first control resource set and the at least two TCI states, which are not limited in the embodiments of the present invention.

In the embodiments of the present invention, it is determined whether to monitor the PDCCH candidate resource of the first control resource set according to the at least one TCI state indicated by the network device. Therefore, the terminal and the network device may reach an agreement on whether to monitor the control resource set, and a signal quality of the M-TRP transmission based on the TCI state is improved.

It should be noted that steps S21-S22 may be implemented independently or in conjunction with any embodiment of the present invention, and will not be elaborated herein.

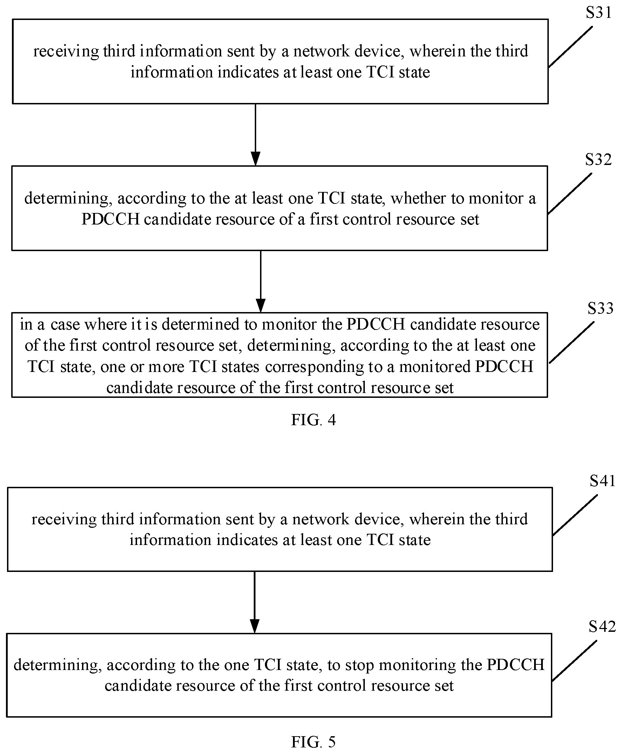

In embodiments of the present invention, in step S22, it may be determined whether to monitor the PDCCH candidate resource of the first control resource set according to the at least one TCI state. However, there are many methods for determining whether to monitor the PDCCH candidate resource of the first control resource set according to the at least one TCI state, and these methods are respectively described in the following solutions as shown in FIGS. 4 to 9 in embodiments of the present invention. It should be noted that multiple solutions shown in FIGS. 4 to 9 in embodiments of the present invention may be implemented independently, or may be implemented together with any one of embodiments in combination with other embodiments.

In the method for determining the TCI state provided by embodiments of the present invention, on the basis of determining to monitor the PDCCH candidate resource of the first control resource set according to the at least one TCI state indicated by the third information, it is further determined, according to the at least one TCI state, which TCI state corresponds to the monitored PDCCH candidate resource of the first control resource set. As shown in FIG. 4, FIG. 4 is a flow chart illustrating a method for determining a TCI state according to an illustrative embodiment, which includes the following steps.

In step S31, third information sent by a network device is received, in which the third information indicates at least one TCI state.

In step S32, it is determined, according to the at least one TCI state, whether to monitor a PDCCH candidate resource of a first control resource set.

In step S33, in a case where it is determined to monitor the PDCCH candidate resource of the first control resource set, it is determined, according to the at least one TCI state, one or more TCI states corresponding to a monitored PDCCH candidate resource of the first control resource set.

In the embodiments of the present invention, the at least one TCI indicated by the third information is determined according to the third information sent by the network device. It is determined, according to the at least one TCI state, whether to monitor the PDCCH candidate resource of the first control resource set. In a case where it is determined to monitor the PDCCH candidate resource of the first control resource set, it is determined, according to the at least one TCI state, the one or more TCI states corresponding to the monitored PDCCH candidate resource of the first control resource set. Therefore, the terminal and the network device may use the same TCI state for transmission, and a signal quality of the M-TRP transmission based on the TCI state is improved.

The following describes how to determine, according to the at least one TCI state, whether to monitor the PDCCH candidate resource of the first control resource set.

In the method for determining the TCI state provided by the embodiments of the present invention, it is determined, according to one TCI state, to stop monitoring the PDCCH candidate resource of the first control resource set in response to that a TCI state indicated by the third information is the one TCI state. As shown in FIG. 5, FIG. 5 is a flow chart illustrating a method for determining a TCI state according to an illustrative embodiment, which includes the following steps.

In step S41, third information sent by the network device is received, in which the third information indicates at least one TCI state.

In step S42, it is determined, according to the one TCI state, to stop monitoring the PDCCH candidate resource of the first control resource set.

In some embodiments, in a case where the terminal stops monitoring the PDCCH candidate resource of the first control resource set, a control channel element (CCE) corresponding to the PDCCH candidate resource of the first control resource set is not calculated into a numeric count of CCEs monitored by the terminal, or a numeric count of CCEs corresponding to the PDCCH candidate resource of the first control resource set is 0.

In some embodiments, in a case where the terminal stops monitoring the PDCCH candidate resource of the first control resource set, a numeric count of blind detections corresponding to the PDCCH candidate resource of the first control resource set is not calculated into a numeric count of blind detections monitored by the terminal, or a numeric count of blind detections corresponding to the PDCCH candidate resource of the first control resource set is 0.

In embodiments of the present invention, in a case where the third information sent by the network device indicates the one TCI state, the terminal determines to stop monitoring the PDCCH candidate resource of the first control resource set. Therefore, the terminal and the network device may reach an agreement on whether to monitor the PDCCH candidate resource of the first control resource set, and a signal quality of the M-TRP transmission based on the TCI state is improved.

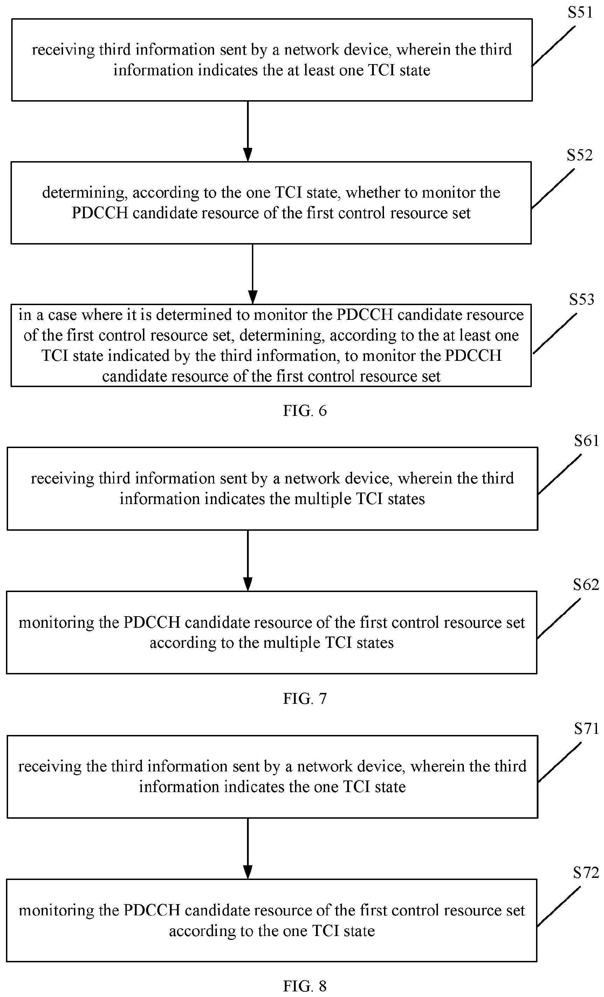

In the method for determining the TCI state provided by the embodiments of the present invention, on the basis of determining to monitor the PDCCH candidate resource of the first control resource set according to at least one TCI state indicated by third information, the PDCCH candidate resource of the first control resource set is monitored according to the at least one TCI state indicated by the third information. As shown in FIG. 6, FIG. 6 is a flow chart illustrating a method for determining a TCI state according to an illustrative embodiment, which includes the following steps.

In step S51, third information sent by the network device is received, in which the third information indicates the at least one TCI state.

In step S52, it is determined, according to the one TCI state, whether to monitor the PDCCH candidate resource of the first control resource set.

In step S53, in a case where it is determined to monitor the PDCCH candidate resource of the first control resource set, it is determined, according to the at least one TCI state indicated by the third information, to monitor the PDCCH candidate resource of the first control resource set.

The at least one TCI indicated by the third information is determined according to the third information sent by the network device. It is determined, according to the at least one TCI state, whether to monitor the PDCCH candidate resource of the first control resource set. In a case where it is determined to monitor the PDCCH candidate resource of the first control resource set, it is determined, according to the at least one TCI state indicated by the third information, to monitor the PDCCH candidate resource of the first control resource set. Therefore, the terminal and the network device may use the same TCI state for transmission, and a signal quality of the M-TRP transmission based on the TCI state is improved.

The following describes how to monitor the PDCCH candidate resource of the first control resource set according to the at least one TCI state indicated by the third information.

In the method for determining the TCI state provided by the embodiments of the present invention, in a case where the TCI state indicated by third information refers to plurality of TCI states, the terminal monitors the PDCCH candidate resource of the first control resource set according to the plurality of TCI states. As shown in FIG. 7, FIG. 7 is a flow chart illustrating a method for determining a TCI state according to an illustrative embodiment, which includes the following steps.

In step S61, third information sent by the network device is received, in which the third information indicates the plurality of TCI states.

In step S62, the PDCCH candidate resource of the first control resource set is monitored according to the plurality of TCI states.

In an illustrative embodiment, in a case where the plurality of TCI states indicated by the third information include a first TCI state and a second TCI state, the PDCCH candidate resource of the first control resource set is simultaneously monitored according to the first TCI state and the second TCI state.

In some embodiments, in a case where the terminal simultaneously monitors the PDCCH candidate resource of the first control resource set according to the first TCI state and the second TCI state, a CCE corresponding to the PDCCH candidate resource of the first control resource set needs to be calculated into a numeric count of CCEs monitored by the terminal.

In some embodiments, in a case where the terminal simultaneously monitors the PDCCH candidate resource of the first control resource set according to the first TCI state and the second TCI state, a numeric count of blind detections corresponding to the PDCCH candidate resource of the first control resource set needs to be calculated into the numeric count of blind detections monitored by the terminal, in which the numeric count of blind detections corresponding to the PDCCH candidate resource of the first control resource set is 1, 2 or 3.

In the method for determining the TCI state provided by the embodiments of the present invention, in a case where the TCI state indicated by third information is one TCI state, the PDCCH candidate resource of the first control resource set is monitored according to the one TCI state. As shown in FIG. 8, FIG. 8 is a flow chart illustrating a method for determining a TCI state according to an illustrative embodiment, which includes the following steps.

In step S71, the third information sent by the network device is received, in which the third information indicates the one TCI state.

In step S72, the PDCCH candidate resource of the first control resource set is monitored according to the one TCI state.

In an illustrative embodiment, in a case where the one TCI state indicated by the third information includes a first TCI state, the PDCCH candidate resource of the first control resource set is monitored according to the first TCI state.

In some embodiments, in a case where the terminal monitors the PDCCH candidate resource of the first control resource set according to the one TCI state, a CCE corresponding to the PDCCH candidate resource of the first control resource set needs to be calculated into a numeric count of CCEs monitored by the terminal.

In some embodiments, in a case where the terminal monitors the PDCCH candidate resource of the first control resource set according to the one TCI state, a numeric count of blind detections corresponding to the PDCCH candidate resource of the first control resource set needs to be calculated into the numeric count of blind detections monitored by the terminal, in which the numeric count of blind detections corresponding to the PDCCH candidate resource of the first control resource set is 1.

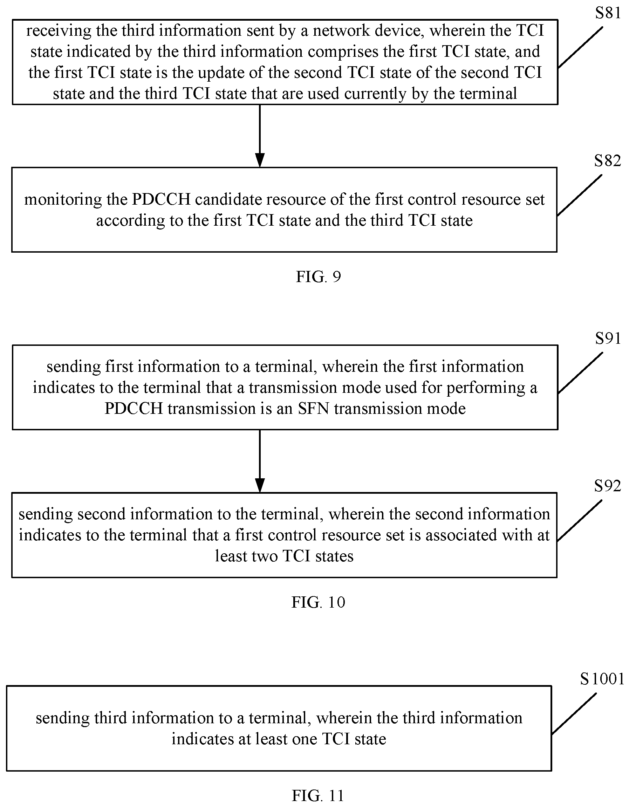

In the method for determining the TCI state provided by the embodiments of the present invention, in response to that the TCI state indicated by third information includes a first TCI state, where the first TCI state is an update of a second TCI state of the second TCI state and a third TCI state that are used currently by the terminal, the PDCCH candidate resource of the first control resource set is monitored according to the first TCI state and the third TCI state. As shown in FIG. 9, FIG. 9 is a flow chart illustrating a method for determining a TCI state according to an illustrative embodiment, which includes the following steps.

In step S81, the third information sent by the network device is received, in which the TCI state indicated by the third information includes the first TCI state, and the first TCI state is the update of the second TCI state of the second TCI state and the third TCI state that are used currently by the terminal.

In step S82, the PDCCH candidate resource of the first control resource set is monitored according to the first TCI state and the third TCI state.

In some embodiments, in a case where the terminal simultaneously monitors the PDCCH candidate resource of the first control resource set according to the first TCI state and the third TCI state, a CCE corresponding to the PDCCH candidate resource of the first control resource set needs to be calculated into a numeric count of CCEs monitored by the terminal.

In some embodiments, in a case where the terminal simultaneously monitors the PDCCH candidate resource of the first control resource set according to the first TCI state and the third TCI state, a numeric count of blind detections corresponding to the PDCCH candidate resource of the first control resource set needs to be calculated into a numeric count of blind detections monitored by the terminal, in which the numeric count of blind detections corresponding to the PDCCH candidate resource of the first control resource set is 1, 2 or 3.

It is worth noting that the first TCI state indicated by the third information in the embodiments of the present invention may include one or more TCI states, and the TCI state being used currently by the terminal does not only include the second TCI state and the third TCI state. The first TCI state indicated by the third information indicates that the TCI states used currently by the terminal are partially updated, such that the terminal monitors the PDCCH candidate resource of the first control resource set according to the first TCI state and the non-updated TCI state.

In the method for determining the TCI state provided by the embodiments of the present invention, the second information indicates the association relationship between the first control resource set and the at least two TCI states in at least one manner of: A) indicating at least two TCI states corresponding to the first control resource set; or B) indicating at least two TCI states corresponding to a control resource set group or a control resource set pool index to which the first control resource set belongs.

In the method for determining the TCI state provided by the embodiments of the present invention, the second information includes at least one of: a radio resource control (RRC) signaling; a medium access control-control element (MAC-CE); or downlink control information (DCI).

In the method for determining the TCI state provided by embodiments of the present invention, the third information includes at least one of: the MAC-CE; or the DCI.

In an illustrative embodiment, the third information includes the MAC-CE, or the MAC-CE + the DCI.

In the method for determining the TCI state provided by the embodiments of the present invention, the MAC-CE indicates at least one TCI state corresponding to one code point in a TCI state indication field carried in the DCI; or the MAC-CE indicates at least one TCI state corresponding to multiple code points in the TCI state indication field carried in the DCI, and the TCI state indication field carried in the DCI indicates one code point among the multiple code points.

In the method for determining the TCI state provided by embodiments of the present invention, the at least one TCI state indicated by the third information is configured to determine a QCL assumption of at least one of a PDSCH, a PDCCH, a control resource set associated with the PDCCH, a DMRS of the PDSCH and/or the PDCCH, or a non-zero power (NZP) CSI-RS; and/or the at least one TCI state indicated by the third information is configured to determine a QCL assumption of at least one of a PUCCH, a PUSCH, a DMRS of the PUCCH and/or the PUSCH, or an SRS.

In the method for determining the TCI state provided by the embodiments of the present invention, the TCI state includes an uplink and downlink joint TCI state and/or a downlink TCI state.

Based on the same concept, the present invention further provides a method for determining a TCI state applied to a network device.

FIG. 10 is a flow chart illustrating a method for determining a TCI state according to an illustrative embodiment. As shown in FIG. 10, the method for determining the TCI state is applied to the network device and includes the following steps.

In step S91, first information is sent to a terminal, in which the first information indicates to the terminal that a transmission mode used for performing a PDCCH transmission is an SFN transmission mode.

In step S92, second information is sent to the terminal, in which the second information indicates to the terminal that a first control resource set is associated with at least two TCI states.

In the embodiments of the present invention, in a case where the terminal determines that the transmission mode used for performing the PDCCH transmission is the SFN transmission mode according to the first information sent by the network device, the association relationship between the first control resource set and the at least two TCI states is determined according to the second information sent by the network device. Accordingly, since both the terminal and the network device may determine the at least two TCI states associated with the first control resource set, the terminal and the network device may perform the PDCCH transmission using the consistent TCI state, a signal quality of the M-TRP transmission based on the TCI state is improved.

FIG. 11 is a flow chart illustrating a method for determining a TCI state according to an illustrative embodiment, which includes the following steps as shown in FIG. 9.

In step S1001, third information is sent to the terminal, in which the third information indicates at least one TCI state.

The at least one TCI state indicates whether the terminal monitors the PDCCH candidate resource of the first control resource set; and/or the at least one TCI state indicates one or more TCI states corresponding to the PDCCH candidate resource of the first control resource set monitored by the terminal.

In the embodiments of the present invention, the terminal determines the association relationship between the first control resource set and at least two TCI states. Specifically, the association relationship between the first control resource set and the at least two TCI states may be determined in any manner. For example, the association relationship between the first control resource set and the at least two TCI states may be determined by an association relationship between the first control resource set and the at least two TCI states indicated by second information in the method of steps S91 to S92, and then the second information indicates the association relationship between the first control resource sent and the TCI states indicated by the third information. Other methods may be used to determine the association relationship between the first control resource set and the at least two TCI states, which are not limited in the embodiments of the present invention.

In the embodiments of the present invention, the association relationship between the first control resource set and the at least two TCI states indicated by the second information indicates the association relationship with the TCI states indicated by the third information.

In embodiments of the present invention, it is determined whether to monitor the PDCCH candidate resource of the first control resource set according to the at least one TCI state indicated by the network device. Therefore, the terminal and the network device may reach an agreement on whether to monitor the control resource set, and a signal quality of the M-TRP transmission based on the TCI state is improved.

It should be noted that step S81 may be implemented independently or in conjunction with any embodiment of the present invention, and will not be elaborated herein.

In the embodiments of the present invention, the terminal may determine whether to monitor the PDCCH candidate resource of the first control resource set according to the at least one TCI state. However, there are many methods for determining whether to monitor the PDCCH candidate resource of the first control resource set according to the at least one TCI state, and these methods are respectively described in the following solutions in embodiments of the present invention. It should be noted that multiple solutions in embodiments of the present invention may be implemented independently, or may be implemented together with any one of embodiments in combination with other embodiments.

In the method for determining the TCI state provided by embodiments of the present invention, the TCI state indicated by the third information is one TCI state, and the one TCI state indicates that the terminal stops monitoring the PDCCH candidate resource of the first control resource set.

In some embodiments, in a case where the terminal stops monitoring the PDCCH candidate resource of the first control resource set, a CCE corresponding to the PDCCH candidate resource of the first control resource set is not calculated into a numeric count of CCEs monitored by the terminal, or a numeric count of CCEs corresponding to the PDCCH candidate resource of the first control resource set is 0.

In some embodiments, in a case where the terminal stops monitoring the PDCCH candidate resource of the first control resource set, a numeric count of blind detections corresponding to the PDCCH candidate resource of the first control resource set is not calculated into a numeric count of blind detections monitored by the terminal, or a numeric count of blind detections corresponding to the PDCCH candidate resource of the first control resource set is 0.

In the method for determining the TCI state provided by the embodiments of the present invention, the at least one TCI state indicated by the third information indicates that the terminal monitors the PDCCH candidate resource of the first control resource set.

In the method for determining the TCI state provided by the embodiments of the present invention, the TCI state indicated by the third information is a plurality of TCI states, and the plurality of TCI states indicate that the terminal monitors the PDCCH candidate resource of the first control resource set.

In some embodiments, in a case where the terminal simultaneously monitors the PDCCH candidate resource of the first control resource set according to a first TCI state and a second TCI state, the CCE corresponding to the PDCCH candidate resource of the first control resource set needs to be calculated into the numeric count of CCEs monitored by the terminal.

In some embodiments, in a case where the terminal simultaneously monitors the PDCCH candidate resource of the first control resource set according to the first TCI state and the second TCI state, the numeric count of blind detections corresponding to the PDCCH candidate resource of the first control resource set needs to be calculated into the numeric count of blind detections monitored by the terminal, in which the numeric count of blind detections corresponding to the PDCCH candidate resource of the first control resource set is 1, 2 or 3.

In the method for determining the TCI state provided by embodiments of the present invention, the TCI state indicated by the third information is the one TCI state, and the one TCI state indicates that the terminal monitors the PDCCH candidate resource of the first control resource set.

In some embodiments, in a case where the terminal monitors the PDCCH candidate resource of the first control resource set according to the one TCI state, the CCE corresponding to the PDCCH candidate resource of the first control resource set needs to be calculated into the numeric count of CCEs monitored by the terminal.

In some embodiments, in a case where the terminal monitors the PDCCH candidate resource of the first control resource set according to the one TCI state, the numeric count of blind detections corresponding to the PDCCH candidate resource of the first control resource set needs to be calculated into the numeric count of blind detections monitored by the terminal, in which the numeric count of blind detections corresponding to the PDCCH candidate resource of the first control resource set is 1.

In the method for determining the TCI state provided by embodiments of the present invention, the TCI state indicated by the third information includes the first TCI state, and the first TCI state is an update of the second TCI state of the second TCI state and a third TCI state that are used currently by the terminal; and the first TCI state indicates that the terminal monitors the PDCCH candidate resource of the first control resource set.

It is worth noting that the terminal may simultaneously monitor the PDCCH candidate resource of the first control resource set according to the first TCI state and the third TCI state.

In some embodiments, in a case where the terminal simultaneously monitors the PDCCH candidate resource of the first control resource set according to the first TCI state and the third TCI state, the CCE corresponding to the PDCCH candidate resource of the first control resource set needs to be calculated into the numeric count of CCEs monitored by the terminal.

In some embodiments, in a case where the terminal simultaneously monitors the PDCCH candidate resource of the first control resource set according to the first TCI state and the third TCI state, the numeric count of blind detections corresponding to the PDCCH candidate resource of the first control resource set needs to be calculated into the numeric count of blind detections monitored by the terminal, in which the numeric count of blind detections corresponding to the PDCCH candidate resource of the first control resource set is 1, 2 or 3.

The first TCI state indicated by the third information in the embodiments of the present invention may include one or more TCI states, and the TCI state being used currently by the terminal does not only include the second TCI state and the third TCI state. The first TCI state indicated by the third information indicates that the TCI states used currently by the terminal is partially updated, such that the terminal monitors the PDCCH candidate resource of the first control resource set according to the first TCI state and the non-updated TCI state.

In the method for determining the TCI state provided by the embodiments of the present invention, the second information indicates the association relationship between the first control resource set and the at least two TCI states in at least one manner of: indicating at least two TCI states corresponding to the first control resource set; or indicating at least two TCI states corresponding to a control resource set group or a control resource set pool index to which the first control resource set belongs.

In the method for determining the TCI state provided by the embodiments of the present invention, the second information includes at least one of: an RRC signaling; an MAC-CE; or DCI.

In the method for determining the TCI state provided by embodiments of the present invention, the third information includes at least one of: the MAC-CE; or the DCI.

In an illustrative embodiment, the third information includes the MAC-CE, or the MAC-CE + the DCI.

In the method for determining the TCI state provided by the embodiments of the present invention, the MAC-CE indicates at least one TCI state corresponding to one code point in a TCI state indication field carried in the DCI; or the MAC-CE indicates at least one TCI state corresponding to multiple code points in the TCI state indication field carried in the DCI, and the TCI state indication field carried in the DCI indicates one code point among the multiple code points.

In the method for determining the TCI state provided by the embodiments of the present invention, the at least one TCI state indicated by the third information is configured to determine a QCL assumption of at least one of a PDSCH, a PDCCH, a control resource set associated with the PDCCH, a DMRS of the PDSCH and/or the PDCCH, or an NZP CSI-RS; and/or the at least one TCI state indicated by the third information is configured to determine a QCL assumption of at least one of a PUCCH, a PUSCH, a DMRS of the PUCCH and/or the PUSCH, or an SRS.

In the method for determining the TCI state provided by the embodiments of the present invention, the TCI state includes an uplink and downlink joint TCI state and/or a downlink TCI state.

It should be noted that those skilled in the art may understand that the various implementations/embodiments involved in embodiments of the present invention may be used in conjunction with the aforementioned embodiments or may be used independently. The principles of implementation are similar, whether used alone or in conjunction with the aforementioned embodiments. In the implementation of the present invention, some embodiments are described in terms of implementations used together. Those skilled in the art may understand that such illustrations do not limit embodiments of the present invention.

Based on the same concept, embodiments of the present invention further provide an apparatus for determining a TCI state.

It may be understood that, the apparatus for determining the TCI state provided by the embodiments of the present invention includes corresponding hardware structures and/or software modules for performing various functions in order to implement the above-mentioned functions. The embodiments of the present invention may be implemented in a form of hardware or a combination of hardware and computer software in combination with units and algorithm steps of each example disclosed in the embodiments of the present invention. Whether a function is performed by hardware or by hardware driven by computer software depends on specific applications and design constraints of the technical solution. Those skilled in the art may use different methods to implement the described functions for each specific application, but such an implementation should not be regarded as extending beyond the scope of the technical solutions of the embodiments of the present invention.

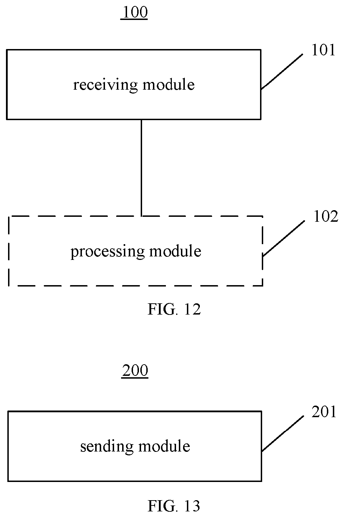

FIG. 12 is a block diagram illustrating an apparatus for determining a TCI state according to an illustrative embodiment. Referring to FIG. 12, the apparatus includes a receiving module 101. The apparatus 100 for determining the TCI state may be applied to a terminal.

The receiving module 101 is configured to receive first information sent by a network device, in which the first information indicates to the terminal that a transmission mode used for performing a PDCCH transmission is an SFN transmission mode.

The receiving module 101 is further configured to receive second information sent by the network device, in which the second information indicates to the terminal that a first control resource set is associated with at least two TCI states.

In an implementation, the apparatus 100 for determining the TCI state further includes a processing module 102.

The receiving module 101 is configured to receive third information sent by the network device, in which the third information indicates at least one TCI state.

The processing module 102 is configured to determine, according to the at least one TCI state, whether to monitor a PDCCH candidate resource of the first control resource set; and/or determine, according to the at least one TCI state, one or more TCI states corresponding to a monitored PDCCH candidate resource of the first control resource set.

In an implementation, the TCI state indicated by the third information is one TCI state; and the processing module 102 is configured to determine, according to the one TCI state, to stop monitoring the PDCCH candidate resource of the first control resource set.

In an implementation, the processing module 102 is configured to monitor the PDCCH candidate resource of the first control resource set according to the at least one TCI state indicated by the third information.

In an implementation, the TCI state indicated by the third information is a plurality of TCI states; and the processing module 102 is configured to monitor the PDCCH candidate resource of the first control resource set according to the plurality of TCI states.

In an implementation, the TCI state indicated by the third information is the one TCI state; and the processing module 102 is configured to monitor the PDCCH candidate resource of the first control resource set according to the one TCI state.

In an implementation, the TCI state indicated by the third information includes a first TCI state, and the first TCI state is an update of a second TCI state of the second TCI state and a third TCI state that are used currently by the terminal; and the processing module 102 is configured to monitor the PDCCH candidate resource of the first control resource set according to the first TCI state and the third TCI state.

In an implementation, the second information indicates the association relationship between the first control resource set and the at least two TCI states in at least one manner of: indicating at least two TCI states corresponding to the first control resource set; or indicating at least two TCI states corresponding to a control resource set group or a control resource set pool index to which the first control resource set belongs.

In an implementation, the second information includes at least one of: an RRC signaling; an MAC-CE; or DCI.

In an implementation, the third information includes at least one of: the MAC-CE; or the DCI.

In an implementation, the MAC-CE indicates at least one TCI state, and the at least one TCI corresponds to one code point in a TCI state indication field carried in the DCI; or the MAC-CE indicates at least one TCI state, a plurality of code points in the TCI state indication field carried in the DCI correspond to the at least one TCI state respectively, and the TCI state indication field carried in the DCI indicates one code point among the plurality of code points.

In an implementation, the at least one TCI state indicated by the third information is configured to determine a QCL assumption of at least one of a PDSCH, a PDCCH, a control resource set associated with the PDCCH, a DMRS of the PDSCH and/or the PDCCH, or an NZP CSI-RS; and/or the at least one TCI state indicated by the third information is configured to determine a QCL assumption of at least one of a PUCCH, a PUSCH, a DMRS of the PUCCH and/or the PUSCH, or an SRS.

In an implementation, the TCI state includes an uplink and downlink joint TCI state and/or a downlink TCI state.

FIG. 13 is a block diagram illustrating an apparatus for determining a TCI state according to an illustrative embodiment. Referring to FIG. 13, the apparatus includes a sending module 201. The apparatus 200 for determining the TCI state may be applied to a network device.

The sending module 201 is configured to send first information to a terminal, in which the first information indicates to the terminal that a transmission mode used for performing a PDCCH transmission is an SFN transmission mode.

The sending module 201 is further configured to send second information to the terminal, in which the second information indicates to the terminal that a first control resource set is associated with at least two TCI states.

In an implementation, the sending module 201 is configured to send third information to the terminal, in which the third information indicates at least one TCI state; in which the at least one TCI state indicates whether the terminal monitors a PDCCH candidate resource of the first control resource set; and/or the at least one TCI state indicates one or more TCI states corresponding to the PDCCH candidate resource of the first control resource set monitored by the terminal.

In an implementation, the TCI state indicated by the third information is one TCI state, and the one TCI state indicates that the terminal stops monitoring the PDCCH candidate resource of the first control resource set.

In an implementation, the at least one TCI state indicated by the third information indicates that the terminal monitors the PDCCH candidate resource of the first control resource set.

In an implementation, the TCI state indicated by the third information is a plurality of TCI states, and the plurality of TCI states indicate that the terminal monitors the PDCCH candidate resource of the first control resource set.

In an implementation, the TCI state indicated by the third information is one TCI state, and the one TCI state indicates that the terminal monitors the PDCCH candidate resource of the first control resource set.

In an implementation, the TCI state indicated by the third information includes a first TCI state, and the first TCI state is an update of a second TCI state of the second TCI state and a third TCI state that are used currently by the terminal; and the first TCI state indicates that the terminal monitors the PDCCH candidate resource of the first control resource set.

In an implementation, the second information indicates a mapping relationship between the first control resource set and the at least two TCI states in at least one of: indicating at least two TCI states corresponding to the first control resource set; or indicating at least two TCI states corresponding to a control resource set group or a control resource set pool index to which the first control resource set belongs.

In an implementation, the second information includes at least one of: an RRC signaling; an MAC-CE; or DCI.

In an implementation, the third information includes at least one of: the MAC-CE; or the DCI.

In an implementation, the MAC-CE indicates at least one TCI state, and the at least one TCI corresponds to one code point in a TCI state indication field carried in the DCI; or the MAC-CE indicates at least one TCI state, a plurality of code points in the TCI state indication field carried in the DCI correspond to the at least one TCI state respectively, and the TCI state indication field carried in the DCI indicates one code point among the plurality of code points.

In an implementation, the at least one TCI state indicated by the third information is configured to determine a QCL assumption of at least one of a PDSCH, a PDCCH, a control resource set associated with the PDCCH, a DMRS of the PDSCH and/or the PDCCH, or an NZP CSI-RS; and/or the at least one TCI state indicated by the third information is configured to determine a QCL assumption of at least one of a PUCCH, a PUSCH, a DMRS of the PUCCH and/or the PUSCH, or an SRS.

In an implementation, the TCI state includes an uplink and downlink joint TCI state and/or a downlink TCI state.

It should be noted that the various modules/units involved in the apparatus 100 for determining the TCI state and the apparatus 200 for determining the TCI state according to the embodiments of the present invention are merely exemplary descriptions, and are not limited thereto. For example, the apparatus 100 for determining the TCI state in the embodiments of the present invention may further include a sending unit. The apparatus 200 for determining the TCI state may further include a receiving unit and/or a processing unit. Here, the units included in the apparatus 100 for determining the TCI state and the apparatus 200 for determining the TCI state may interact with each other or may interact with other network element devices.

With regard to the apparatuses in the above embodiments, the specific way in which each module performs operation(s) has been described in detail in the embodiments of the method, and will not be described in detail here.

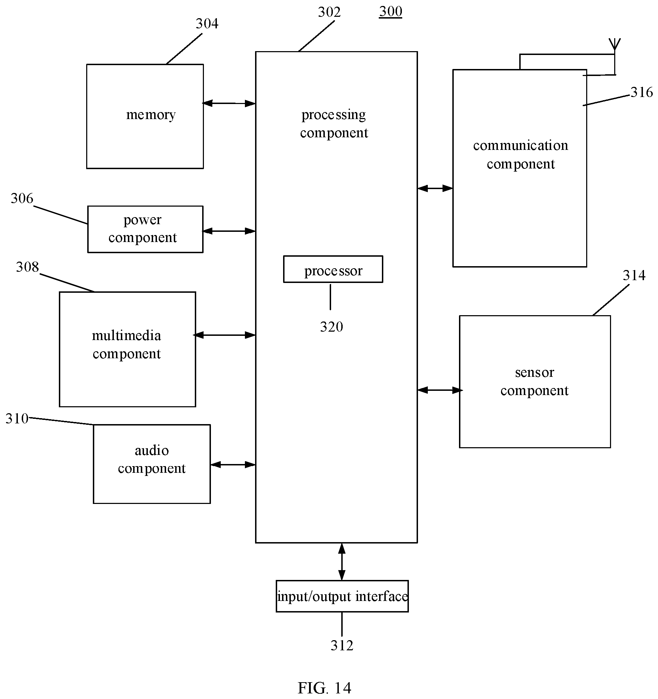

FIG. 14 is a block diagram illustrating a device for determining a TCI state according to an illustrative embodiment. For example, a device 300 can be a mobile phone, a computer, a digital broadcast terminal, a messaging device, a game console, a tablet device, a medical device, a fitness device, a personal digital assistant, or the like.

Referring to FIG. 14, the device 300 may include one or more of the following components: a processing component 302, a memory 304, a power component 306, a multimedia component 308, an audio component 310, an input/output (I/O) interface 312, a sensor component 314, and a communication component 316.

The processing component 302 typically controls overall operations of the device 300, such as the operations associated with display, phone calls, data communications, camera operations, and recording operations. The processing component 302 can include one or more processors 320 to execute instructions to perform all or some of the steps in the above-described methods. Moreover, the processing component 302 may include one or more modules which facilitate the interaction between the processing component 302 and other components. For instance, the processing component 302 may include a multimedia module to facilitate the interaction between the multimedia component 308 and the processing component 302.

The memory 304 is configured to store various types of data to support the operation of the device 300. Examples of such data include instructions for any applications or methods operated on the device 300, contact data, phonebook data, messages, pictures, videos, etc. The memory 304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 306 provides power to various components of the device 300. The power component 306 may include a power management system, one or more power sources, and any other components associated with the generation, management, and distribution of power in the device 300.

The multimedia component 308 includes a screen providing an output interface between the device 300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 308 includes a front camera and/or a rear camera. The front camera and/or the rear camera may receive an external multimedia datum while the device 300 is in an operation mode, such as a photographing mode or a video mode. Each of the front camera and the rear camera may be a fixed optical lens system or have focus and optical zoom capability.

The audio component 310 is configured to output and/or input audio signals. For example, the audio component 310 includes a microphone (MIC) configured to receive an external audio signal when the device 300 is in an operation mode, such as a call mode, a recording mode, and a voice recognition mode. The received audio signal may be further stored in the memory 304 or transmitted via the communication component 316. In some embodiments, the audio component 310 further includes a speaker to output audio signals.

The I/O interface 312 provides an interface between the processing component 302 and peripheral interface modules, such as keyboards, click wheels, buttons, and the like. The buttons may include, but are not limited to, a home button, a volume button, a starting button, and a locking button.

The sensor component 314 includes one or more sensors to provide status assessments of various aspects of the device 300. For instance, the sensor component 314 may detect an open/closed status of the device 300, relative positioning of components, e.g., the display and the keypad, of the device 300, a change in position of the device 300 or a component of the device 300, a presence or absence of user contact with the device 300, an orientation or an acceleration/deceleration of the device 300, and a change in temperature of the device 300. The sensor component 314 may include a proximity sensor configured to detect the presence of nearby objects without any physical contact. The sensor component 314 may further include a light sensor, such as a CMOS or CCD image sensor, for use in imaging applications. In some embodiments, the sensor component 314 may further include an accelerometer sensor, a gyroscope sensor, a magnetic sensor, a pressure sensor, or a temperature sensor.

The communication component 316 is configured to facilitate communication, wired or wireless, between the device 300 and other devices. The device 300 can access a wireless network based on a communication standard, such as Wi-Fi, 2G, or 3G, or a combination thereof. In an illustrative embodiment, the communication component 316 receives a broadcast signal or broadcast associated information from an external broadcast management system via a broadcast channel. In an illustrative embodiment, the communication component 316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the device 300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above methods.

In an illustrative embodiment, there is also provided a non-transitory computer readable storage medium including instructions, such as included in the memory 304, executable by the processor 320 in the device 300, for completing the above-mentioned network data collection method. For example, the non-transitory computer-readable storage medium may be a ROM, a random access memory (RAM), a CD-ROM, a magnetic tape, a floppy disc, an optical data storage device, and the like.

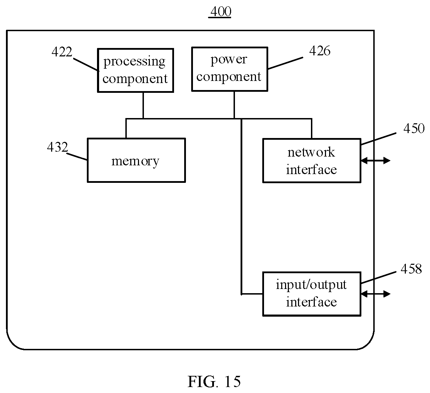

FIG. 15 is a block diagram illustrating a device for determining a TCI state according to an illustrative embodiment. For example, the device 400 is provided as a network device. Referring to FIG. 15, the device 400 includes a processing component 422 including one or more processors and a memory resource represented by a memory 432. The memory 432 is configured to store instructions executable by the processing component 422, such as an application program. The application program stored in the memory 432 may include one or more modules each corresponding to a set of instructions. In addition, the processing component 422 is configured to execute instructions so as to implement the above method.

The device 400 may also include a power component 426 configured to perform power management of the device 400, a wired or wireless network interface 450 configured to connect the device 400 to a network, and an input/output (I/O) interface 458. The device 400 may operate an operating system stored in the memory 432, such as Windows ServerTM, Mac OS XTM, UnixTM, LinuxTM, FreeBSDTM or similar operating systems.

In an embodiment, there is also provided a non-transitory computer-readable storage medium including instructions, such as a memory 432 including instructions, which can be executed by a processing component 422 of the device 400 to perform the above methods. For example, the non-transitory computer readable storage medium may be a ROM, a random access memory (RAM), a CD-ROM (compact disc read-only memory), a magnetic tape, a floppy disk, an optical data storage device, etc.

It is further understood that "a plurality" in this disclosure refers to two or more, and other quantifiers are similar thereto. Wording "and/or", which describes an associated relationship of associated objects, means that there may be three relationships, for example, A and/or B, which may mean that A exists alone, A and B exist at the same time, and B exists alone. A character "/" generally indicates that contextual objects are in an "or" relationship. Wording "a/an" and "the" in singular forms are intended to include plural forms, unless clearly indicated in the context otherwise.

It is further understood that the meaning of words such as "in response to" and "if" involved in the present invention depends on the context and the actual scenario of use, and as used herein, the term "in response to" may be understood to mean "when" or "upon" or "if" depending on the context.

It is further understood that terms such as "first", and "second" are used to describe various information, these information should not be limited by these terms. These terms are only used for distinguishing information of the same type from each other and do not denote a particular order or degree of importance. As a matter of fact, the terms such as "first", and "second" may be used interchangeably. For example, first information may also be referred to as second information, and similarly, the second information may also be referred to as the first information, without departing from the scope of embodiments of the present invention.

It is further understood that although operations are described in a specific order in the accompanying drawings in the embodiments of the present invention, it should not be understood that these operations are required to be performed in the specific order shown or in a serial order, or that all of the operations shown are required to be performed to obtain desired results. In certain circumstances, multitasking and parallel processing may be advantageous.

Other embodiments of the present invention will be apparent to those skilled in the art from consideration of the specification and practice of the present invention disclosed here. The present invention is intended to cover any variations, uses, or adaptations of the present invention following the general principles thereof and including such departures from the present invention as come within known or customary practice in the art. It is intended that the specification and examples be considered as illustrative only, with a true scope and spirit of the present invention being indicated by the following claims.

It will be appreciated that the present invention is not limited to the exact construction that has been described above and illustrated in the accompanying drawings, and that various modifications and changes can be made without departing from the scope thereof. It is intended that the scope of the present invention only be limited by the appended claims.

## Claims

1. A method for determining a transmission configuration indicator (TCI) state, applied to a terminal, comprising:
receiving first information sent by a network device, wherein the first information is configured for the terminal to determine that a transmission mode used for performing a physical downlink control channel (PDCCH) transmission is a single frequency network (SFN) transmission mode; and
receiving second information sent by the network device, wherein the second information is configured for the terminal to determine an association relationship between a first control resource set and at least two TCI states.

2. The method of claim 1, further comprising:
receiving third information sent by the network device, wherein the third information indicates at least one TCI state; and
determining, according to the at least one TCI state, whether to monitor a PDCCH candidate resource of the first control resource set; and/or
determining, according to the at least one TCI state, one or more TCI states corresponding to a monitored PDCCH candidate resource of the first control resource set.

3. The method of claim 2, wherein the TCI state indicated by the third information is one TCI state; and
determining, according to the at least one TCI state, whether to monitor the PDCCH candidate resource of the first control resource set comprises:
determining, according to the one TCI state, to stop monitoring the PDCCH candidate resource of the first control resource set.

4. The method of claim 2, wherein determining, according to the at least one TCI state, the one or more TCI states corresponding to the monitored PDCCH candidate resource of the first control resource set comprises:
monitoring the PDCCH candidate resource of the first control resource set according to the at least one TCI state indicated by the third information.

5. The method of claim 4, wherein the TCI state indicated by the third information is a plurality of TCI states; and
monitoring the PDCCH candidate resource of the first control resource set according to the at least one TCI state indicated by the third information comprises:
monitoring the PDCCH candidate resource of the first control resource set according to the plurality of TCI states.

6. The method of claim 4, wherein the TCI state indicated by the third information is one TCI state; and
monitoring the PDCCH candidate resource of the first control resource set according to the at least one TCI state indicated by the third information comprises:
monitoring the PDCCH candidate resource of the first control resource set according to the one TCI state.

7. The method of claim 4, wherein the TCI state indicated by the third information comprises a first TCI state, and the first TCI state is an update of a second TCI state of the second TCI state and a third TCI state that are used currently by the terminal; and
monitoring the PDCCH candidate resource of the first control resource set according to the at least one TCI state indicated by the third information comprises:
monitoring the PDCCH candidate resource of the first control resource set according to the first TCI state and the third TCI state.

8. The method of any one of claims 1 to 7, wherein the second information indicates the association relationship between the first control resource set and the at least two TCI states in at least one manner of:
indicating at least two TCI states corresponding to the first control resource set; or
indicating at least two TCI states corresponding to a control resource set group or a control resource set pool index to which the first control resource set belongs.

9. The method of any one of claims 1 to 8, wherein the second information comprises at least one of:
a radio resource control (RRC) signaling;
a medium access control-control element (MAC-CE); or
downlink control information (DCI).

10. The method of any one of claims 2 to 9, wherein the third information comprises at least one of:
an MAC-CE; or
DCI.

11. The method of claim 10, wherein the MAC-CE indicates at least one TCI state, and the at least one TCI corresponds to one code point in a TCI state indication field carried in the DCI; or
the MAC-CE indicates at least one TCI state, a plurality of code points in the TCI state indication field carried in the DCI correspond to the at least one TCI state respectively, and the TCI state indication field carried in the DCI indicates one code point among the plurality of code points.

12. The method of any one of claims 2 to 11, wherein the at least one TCI state indicated by the third information is configured to determine a quasi-co-location (QCL) assumption of at least one of a physical downlink shared channel (PDSCH), a PDCCH, a control resource set associated with the PDCCH, a demodulation reference signal (DMRS) of the PDSCH and/or the PDCCH, or a non-zero power (NZP) channel state information reference signal (CSI-RS); and/or
the at least one TCI state indicated by the third information is configured to determine a QCL assumption of at least one of a physical uplink control channel (PUCCH), a physical uplink shared channel (PUSCH), a DMRS of the PUCCH and/or the PUSCH, or a sounding reference signal (SRS).

13. The method of any one of claims 1 to 12, wherein the TCI state comprises an uplink and downlink joint TCI state and/or a downlink TCI state.

14. A method for determining a transmission configuration indicator (TCI) state, applied to a network device, comprising:
sending first information to a terminal, wherein the first information indicates to the terminal that a transmission mode used for performing a physical downlink control channel (PDCCH) transmission is a single frequency network (SFN) transmission mode; and
sending second information to the terminal, wherein the second information indicates to the terminal that a first control resource set is associated with at least two TCI states.

15. The method of claim 14, further comprising:
sending third information to the terminal, wherein the third information indicates at least one TCI state; wherein the at least one TCI state indicates whether the terminal monitors a PDCCH candidate resource of the first control resource set; and/or the at least one TCI state indicates one or more TCI states corresponding to the PDCCH candidate resource of the first control resource set monitored by the terminal.

16. The method of claim 15, wherein the TCI state indicated by the third information is one TCI state, and the one TCI state indicates that the terminal stops monitoring the PDCCH candidate resource of the first control resource set.

17. The method of claim 15, wherein the at least one TCI state indicated by the third information indicates that the terminal monitors the PDCCH candidate resource of the first control resource set.

18. The method of claim 15, wherein the TCI state indicated by the third information is a plurality of TCI states, and the plurality of TCI states indicate that the terminal monitors the PDCCH candidate resource of the first control resource set.

19. The method of claim 15, wherein the TCI state indicated by the third information is one TCI state, and the one TCI state indicates that the terminal monitors the PDCCH candidate resource of the first control resource set.

20. The method of claim 15, wherein the TCI state indicated by the third information comprises a first TCI state, and the first TCI state is an update of a second TCI state of the second TCI state and a third TCI state that are used currently by the terminal; and the first TCI state indicates that the terminal monitors the PDCCH candidate resource of the first control resource set.

21. The method of any one of claims 14 to 20, wherein the second information indicates a mapping relationship between the first control resource set and the at least two TCI states in at least one of:
indicating at least two TCI states corresponding to the first control resource set; or
indicating at least two TCI states corresponding to a control resource set group or a control resource set pool index to which the first control resource set belongs.

22. The method of any one of claims 14 to 21, wherein the second information comprises at least one of:
a radio resource control (RRC) signaling;
a medium access control-control element (MAC-CE); or
downlink control information (DCI).

23. The method of any one of claims 15 to 22, wherein the third information comprises at least one of:
an MAC-CE; or
DCI.

24. The method of claim 23, wherein
the MAC-CE indicates at least one TCI state corresponding to one code point in a TCI state indication field carried in the DCI; or
the MAC-CE indicates at least one TCI state corresponding to a plurality of code points in the TCI state indication field carried in the DCI, and the TCI state indication field carried in the DCI indicates one code point among the plurality of code points.

25. The method of any one of claims 15 to 24, wherein the at least one TCI state indicated by the third information is configured to determine a quasi-co-location (QCL) assumption of at least one of a physical downlink shared channel (PDSCH), a PDCCH, a control resource set associated with the PDCCH, a demodulation reference signal (DMRS) of the PDSCH and/or the PDCCH, or a non-zero power (NZP) channel state information reference signal (CSI-RS); and/or
the at least one TCI state indicated by the third information is configured to determine a QCL assumption of at least one of a physical uplink control channel (PUCCH), a physical uplink shared channel (PUSCH), a DMRS of the PUCCH and/or the PUSCH, or a sounding reference signal (SRS).

26. The method of any one of claims 15 to 25, wherein the TCI state comprises an uplink and downlink joint TCI state and/or a downlink TCI state.

27. An apparatus for determining a transmission configuration indicator (TCI) state, applied to a terminal, comprising:
a receiving module configured to receive first information sent by a network device, wherein the first information indicates to the terminal that a transmission mode used for performing a physical downlink control channel (PDCCH) transmission is a single frequency network (SFN) transmission mode;
wherein the receiving module is further configured to receive second information sent by the network device, and the second information indicates to the terminal that a first control resource set is associated with at least two TCI states.

28. An apparatus for determining a transmission configuration indicator (TCI) state, applied to a network device, comprising:
a sending module configured to send first information to a terminal, wherein the first information indicates to the terminal that a transmission mode used for performing a physical downlink control channel (PDCCH) transmission is a single frequency network (SFN) transmission mode;
wherein the sending module is further configured to send second information to the terminal, and the second information indicates to the terminal that a first control resource set is associated with at least two TCI states.

29. A communication device, comprising:
a processor; and
a memory for storing processor-executable instructions;
wherein the processor is configured to perform the method of any one of claims 1 to 13.

30. A communication device, comprising:
a processor; and
a memory for storing processor-executable instructions;
wherein the processor is configured to perform the method of any one of claims 14 to 26.

31. A storage medium having stored therein instructions that, when executed by a processor of a terminal, cause the terminal to perform the method of any one of claims 1 to 13.

32. A storage medium having stored therein instructions that, when executed by a processor of a network device, cause the network device to perform the method of any one of claims 14 to 26.

33. A communication system, comprising a terminal and a network device, wherein
the terminal is configured to perform the method of any one of claims 1 to 13; and
the network device is configured to perform the method of any one of claims 14 to 26.
